# EUROPEAN PATENT APPLICATION

(11) **EP 3 842 370 A1**
(43) Date of publication of application: **30.06.2021**
(21) Application number: 20208623.7
(22) Date of filing: 19.11.2020
(51) Int. Cl.: B65H 31/30

(54) **BAG BUNDLE TRANSFER SYSTEM AND BAG BUNDLE TRANSFER METHOD**

(30) Priority: 27.12.2019 JP 2019239296
(71) Applicant: Toyo Jidoki Co., Ltd., Tokyo 108-0014 (JP)
(72) Inventor: MORINO, Manabu, Iwakuni-shi, Yamaguchi-ken 740-0045 (JP); FUKUNAGA, Kazuo, Iwakuni-shi, Yamaguchi-ken 740-0045 (JP); KAJIHARA, Shota, Iwakuni-shi, Yamaguchi-ken 740-0045 (JP); UTSUNOMIYA, Takayuki, Iwakuni-shi, Yamaguchi-ken 740-0045 (JP)
(74) Representative: Grünecker Patent- und Rechtsanwälte PartG mbB

(57) **Abstract**

A bag bundle transfer system (10) includes a holding device (12), a movable member (16), a drive device (15) and a moving device (20) wherein: the movable member (16) arranged in the first orientation position (Ps1) in a state where the holding device (12) holds the support part supports from below a part of the bag bundle (91) which is located on an end portion side in a first direction from the support part, and the movable member (16) arranged in the second orientation position (Ps2) in a state where the holding device (12) holds the support part does not support from below a part of the bag bundle (91) which is located on an end portion side in the first direction from the support part.

## Description

### TECHNICAL FIELD

The present disclosure relates to a bag bundle transfer system and a bag bundle transfer method.

### BACKGROUND ART

Japanese patent application publication No. 2008-150180 discloses an apparatus which transfers a sheet bundle including a plurality of sheet bodies such as inkjet paper. In the apparatus of Japanese patent application publication No. 2008-150180, a sheet bundle is transferred in a state where the central portion of the sheet bundle is gripped by a gripping device.

### SUMMARY OF INVENTION

When a bag bundle is lifted in a state of only a part of the bag bundle is gripped, a part of the bag bundle that is not directly gripped hangs down due to the influence of gravity. The degree of such partial sagging of a bag bundle tends to increase as the range of a part of the bag bundle that is not directly gripped becomes wider.

When a bag bundle partially hangs down to a large extent during the transfer of the bag bundle, there is a concern that the bag bundle cannot be placed in a desired place in an appropriate state. For example, when a bag bundle having an end hanging down to a large degree is placed at a desired location, an end portion of a bag included in the bag bundle may be bent due to its own weight.

From the viewpoint of reducing the partial sagging of a bag bundle, it is preferable to support the lower surface of the bag bundle over a wide range (for example, over the entire lower surface). However, it is not easy to properly perform the operation of gripping a bag bundle over a wide range at one time by grip members. In particular, in a case where the thickness of a bag bundle is not uniform, it is difficult for grip members to properly grip the lower surface of the bag bundle over a wide range. In a case where a bag, such as a bag with a fastener or a self-standing bag, has a locally thick portion, it is not easy to make the thickness of a bag bundle uniform.

Further, when grip members capable of gripping a bag bundle over a wide range at one time are provided, the whole of the apparatus tends to be large.

The present disclosure has been conceived in view of the above circumstances, and an object of the present disclosure is to provide a technique capable of transferring a bag bundle to a desired location while preventing the state of the bag bundle from being disturbed.

One aspect of the present disclosure is directed to a bag bundle transfer system of transferring a bag bundle from a first movement position toward a second movement position, the bag bundle transfer system comprising: a holding device which is capable of holding a support part of the bag bundle which is a part of the bag bundle; a movable member which is provided so as to be able to move with respect to the holding device; a drive device which is capable of driving the movable member to move with respect to the holding device so as to arrange the movable member in a first orientation position and a second orientation position; and a moving device which moves the holding device and the movable member in an integrated manner from the first movement position toward the second movement position, wherein: the movable member arranged in the first orientation position in a state where the holding device holds the support part supports from below a part of the bag bundle which is located on an end portion side in a first direction from the support part, and the movable member arranged in the second orientation position in a state where the holding device holds the support part does not support from below a part of the bag bundle which is located on an end portion side in the first direction from the support part.

The drive device may move the movable member in a horizontal direction so as to arrange the movable member in the first orientation position and the second orientation position.

A plurality of movable members may be provided, and the plurality of movable members arranged in the first orientation position in a state where the holding device holds the support part may support from below parts of the bag bundle which are located on both sides in the first direction from the support part.

The bag bundle transfer system may comprise: a placement unit which is arranged in the second movement position and on which the bag bundle is placed by the holding device; and a movement restriction member which restricts movement of the bag bundle, wherein: the holding device may include a first sandwiching member and a second sandwiching member which are capable of sandwiching the bag bundle, the movement restriction member may have an evacuation space, and in a state where the bag bundle is not sandwiched between the first sandwiching member and the second sandwiching member, the moving device may move the holding device in such a manner that the holding device passes through the evacuation space while the movement restriction member restricts movement of the bag bundle.

Another aspect of the present disclosure is directed to a bag bundle transfer method of transferring a bag bundle from a first movement position toward a second movement position and placing the bag bundle on a placement unit arranged in the second movement position, the bag bundle transfer method comprising the steps of: causing a holding device to hold a support part of the bag bundle arranged in the first movement position, the support part being a part of the bag bundle; moving the bag bundle from the first movement position toward the second movement position together with the holding device in a state where the support part is held by the holding device; causing a movable member to move from a second orientation position to a first orientation position in a state where the support part is held by the holding device before the bag bundle is placed on the placement unit, the movable member being moved from the first movement position toward the second movement position together with the holding device in an integrated manner; and placing the bag bundle released from the holding device, on the placement unit, wherein: the movable member arranged in the first orientation position in a state where the holding device holds the support part supports from below a part of the bag bundle which is located on an end portion side in a first direction from the support part, and the movable member arranged in the second orientation position in a state where the holding device holds the support part does not support from below a part of the bag bundle which is located on an end portion side in the first direction from the support part.

The movable member may be moved from the first orientation position to the second orientation position in a state where the bag bundle is positioned directly above the placement unit.

A part of the bag bundle may be placed on the placement unit by moving the movable member from the first orientation position to the second orientation position in a state where the bag bundle is positioned directly above the placement unit.

The holding device may move while bringing the bag bundle into contact with a movement restriction member so as to restrict movement of the bag bundle, in such a manner that the holding device releases the bag bundle and places the bag bundle on the placement unit.

According to the present disclosure, a bag bundle can be transferred to a desired location while the state of the bag bundle is prevented from being disturbed.

### BRIEF DESCRIPTION OF DRAWINGS

Fig. 1 is a diagram showing an example of a bag processing system.
Fig. 2 is a side view showing an example of a bag bundle support device.
Fig. 3 is a diagram of the bag bundle support device shown in Fig. 2 as viewed from above.
Fig. 4 is a rear view of the bag bundle support device shown in Fig. 2.
Fig. 5 is a front view of the bag bundle support device shown in Fig. 2.
Fig. 6 is a front view of the bag bundle support device shown in Fig. 2.
Fig. 7 is a diagram mainly illustrating a moving device as an example.
Fig. 8 is a diagram illustrating an operation example of the bag bundle support device shown in Fig. 2.
Fig. 9 is a diagram illustrating an operation example of the bag bundle support device shown in Fig. 2.
Fig. 10 is a perspective view showing an example of a storage box. Fig. 11 is a side view of a bag bundle support device for explaining an example of a bag bundle transfer method.
Fig. 12 is a side view of a bag bundle support device for explaining an example of a bag bundle transfer method.
Fig. 13 is a side view of a bag bundle support device for explaining an example of a bag bundle transfer method.
Fig. 14 is a side view of a bag bundle support device for explaining an example of a bag bundle transfer method.
Fig. 15 is a plan view showing a configuration example of a second bag bundle transfer device and a bag bundle position adjustment device according to a first modification example of a bag bundle transfer system (bag bundle support device).

### DESCRIPTION OF EMBODIMENTS

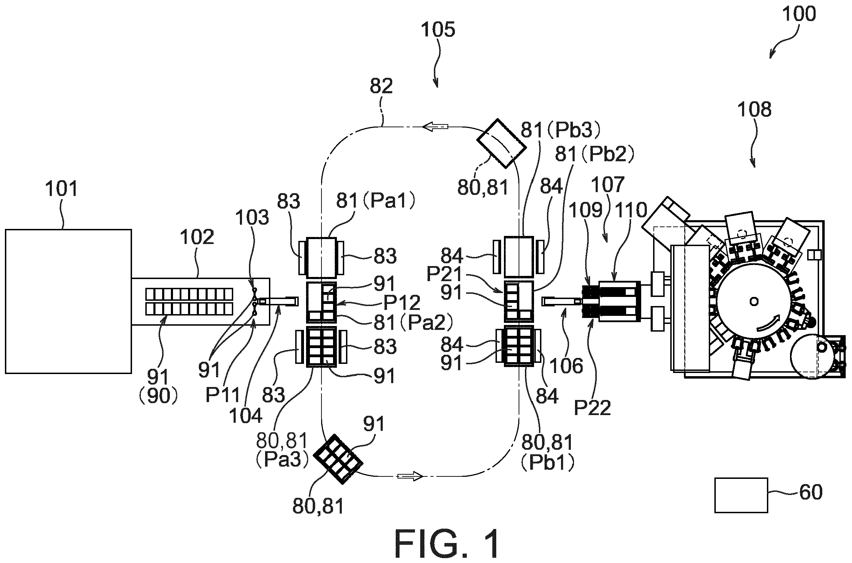

Fig. 1 is a diagram showing an example of a bag processing system 100. The bag processing system 100 includes a bag making machine 101, a transfer conveyor 102, a pickup device 103, a first bag bundle transfer device 104, a bag bundle conveyance unit 105, a second bag bundle transfer device 106, a transfer relay device 107, and a bag filling device 108 which are sequentially provided from the upstream side to the downstream side.

The bag making machine 101 continuously produces a plurality of bag bundles 91 and sequentially feeds them to the transfer conveyor 102. Each bag bundle 91 includes a plurality of bags 90 stacked on each other. The specific form of each bag 90 is not limited. Each bag 90 and each bag bundle 91 illustrated in Fig. 1 have a rectangular planar shape.

The transfer conveyor 102 sequentially sends out bag bundles 91 supplied from the bag making machine 101, toward the pickup device 103.

The pickup device 103 lifts a bag bundle 91 from the transfer conveyor 102 and holds the bag bundle 91 while arranging the bag bundle 91 at a pickup position P11. The illustrated pickup device 103 arranges two bag bundles 91 at the pickup position P11 at a time while gripping both side edge portions of each bag bundle 91.

The first bag bundle transfer device 104 receives a bag bundle 91 from the pickup device 103 and delivers the bag bundle 91 to a storage box 81. Specifically, the first bag bundle transfer device 104 transfers a bag bundle 91 from the pickup position P11 (a first movement position) determined by the pickup device 103, to an accommodation position P12 (a second movement position) determined by a storage box 81 (the bag bundle conveyance unit 105).

A storage box 81 forms a part of the bag bundle conveyance unit 105 and conveys a bag bundle 91 received from the first bag bundle transfer device 104, toward the second bag bundle transfer device 106. The illustrated bag bundle conveyance unit 105 includes a plurality of storage boxes 81 and a plurality of moving bodies 80 that autonomously move along an endless track 82. Two or more storage boxes 81 can be stacked and loaded on each moving body 80. Each moving body 80 goes back and forth along the endless track 82 between a position for receiving a bag bundle 91 from the first bag bundle transfer device 104 (i.e., an accommodation position P12) and a position for delivering a bag bundle 91 to the second bag bundle transfer device 106 (i.e., a take-out position P21).

Each moving body 80 conveys a plurality of empty storage boxes 81 to a first accommodation stop position Pa1 and gives those empty storage boxes 81, in the first accommodation stop position Pa1, to a first storage box holding device 83 including a conveyor (not illustrated) and so on. After that, each moving body 80 moves to a position corresponding to a third accommodation stop position Pa3.

The first storage box holding device 83 carries storage boxes 81 one by one from the first accommodation stop position Pa1 to a second accommodation stop position Pa2. A plurality of bag bundles 91 are placed on a storage box 81 arranged at the second accommodation stop position Pa2 (corresponding to the accommodation position P12) by the pickup device 103. Each storage box 81 on which a predetermined number of bag bundles 91 are placed is carried from the second accommodation stop position Pa2 to the third accommodation stop position Pa3 by the first storage box holding device 83. A plurality of storage boxes 81 are stacked at the third accommodation stop position Pa3, and a predetermined number of stacked storage boxes 81 are placed on a moving body 80 by the first storage box holding device 83. A moving body 80 moves from the third accommodation stop position Pa3 to a first take-out stop position Pb1 together with a plurality of storage boxes 81 loaded thereon.

A moving body 80 carries a plurality of storage boxes 81 to the first take-out stop position Pb1 and gives the storage boxes 81, in the first take-out stop position Pb1, to a second storage box holding device 84 including a conveyor (not shown) and so on. After that, the moving body 80 moves to a position corresponding to a third take-out stop position Pb3.

In each storage box 81 carried to the first take-out stop position Pb1, a plurality of bag bundles 91 replenished at the accommodation position P12 (i.e., the second accommodation stop position Pa2) are stored. The second storage box holding device 84 carries storage boxes 81 one by one from the first take-out stop position Pb1 to the second take-out stop position Pb2. A plurality of bag bundles 91 are taken out by the second bag bundle transfer device 106 from each storage box 81 arranged at the second take-out stop position Pb2 (corresponding to the take-out position P21). A storage box 81 from which all the bag bundles 91 have been taken out is carried by the second storage box holding device 84 from the second take-out stop position Pb2 to the third take-out stop position Pb3. A plurality of empty storage boxes 81 are stacked at the third take-out stop position Pb3 and a predetermined number of stacked storage boxes 81 are placed on a moving body 80 by the second storage box holding device 84. The moving body 80 moves from the third take-out stop position Pb3 to the first accommodation stop position Pa1 together with the plurality of empty storage boxes 81 loaded thereon.

The specific configurations of the first storage box holding device 83 and the second storage box holding device 84 are not limited. For example, a bag supply system disclosed in Japanese patent application No. 2019-198564 may be applied to the bag processing system 100 shown in Fig. 1. The entire contents of Japanese patent application No. 2019-198564 filed on October 31, 2019 with the Japan Patent Office are incorporated herein by reference.

The second bag bundle transfer device 106 takes out a bag bundle 91 from a storage box 81 arranged at the second take-out stop position Pb2 (corresponding to the take-out position P21) and gives the bag bundle 91 to the transfer relay device 107. Specifically, the second bag bundle transfer device 106 transfers a bag bundle 91 from the take-out position P21 (a first movement position) determined by a storage box 81 (the bag bundle conveyance unit 105) to a supply position P22 (a second movement position) determined by the transfer relay device 107.

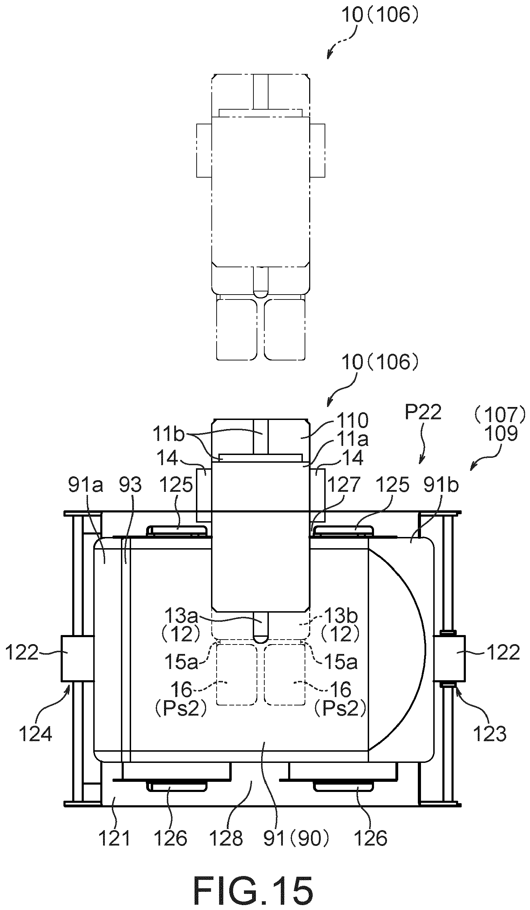

The transfer relay device 107 receives a bag bundle 91 from the second bag bundle transfer device 106 and transfers the bag bundle 91 toward the bag filling device 108. The illustrated transfer relay device 107 includes a bag bundle position adjustment device 109 and a bag bundle delivery device 110. The bag bundle position adjustment device 109 adjusts the position of a bag bundle 91 received from the second bag bundle transfer device 106. The bag bundle delivery device 110 receives a bag bundle 91 whose position has been adjusted, from the bag bundle position adjustment device 109 and sends the bag bundle 91 out toward the bag filling device 108. The specific configurations of the bag bundle position adjustment device 109 and the bag bundle delivery device 110 are not limited. An example of the bag bundle position adjustment device 109 will be described later (see Fig. 15).

The bag filling device 108 receives a bag 90 from the transfer relay device 107, performs processing using the bag 90, and sends the processed bag 90 to a subsequent stage. The specific processing details and the processing method performed in the bag filling device 108 are not limited. The illustrated bag filling device 108 performs printing on a bag 90, puts contents into a bag 90, and seals the mouth part of a bag 90.

The bag processing system 100 further includes a system controller 60. The system controller 60 is connected to devices forming the bag processing system 100 via wires or wirelessly and controls the connected devices. In the illustrated bag processing system 100, each of the bag making machine 101, the transfer conveyor 102, the pickup device 103, the first bag bundle transfer device 104, the bag bundle conveyance unit 105, the second bag bundle transfer device 106, the transfer relay device 107, and the bag filling device 108 operates under the control of the system controller 60. Thus, by controlling various devices with the system controller 60, a bag bundle transfer method performed by the bag bundle transfer system described below is also carried out.

### [Bag bundle support device]

Next, a bag bundle support device 10 (bag bundle transfer system) will be described. Hereinafter, as an example, a case where the first bag bundle transfer device 104 is configured by the bag bundle support device 10 will be described. As will be described later, the second bag bundle transfer device 106 may be configured by the bag bundle support device 10.

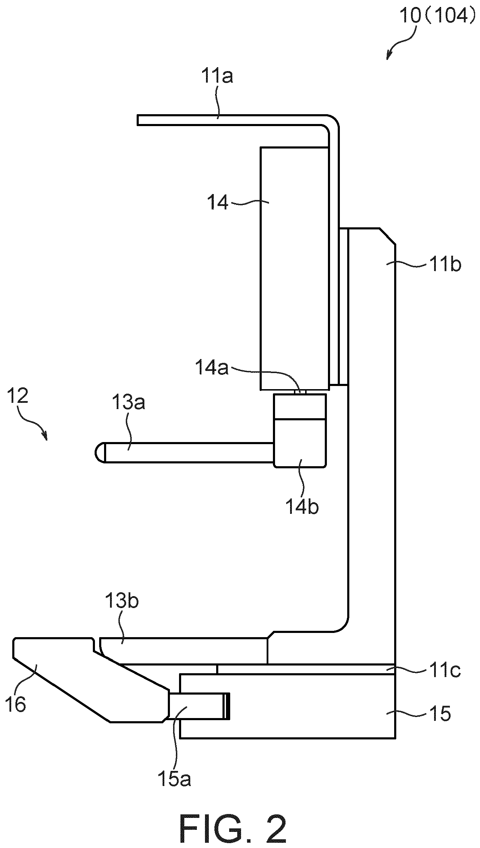

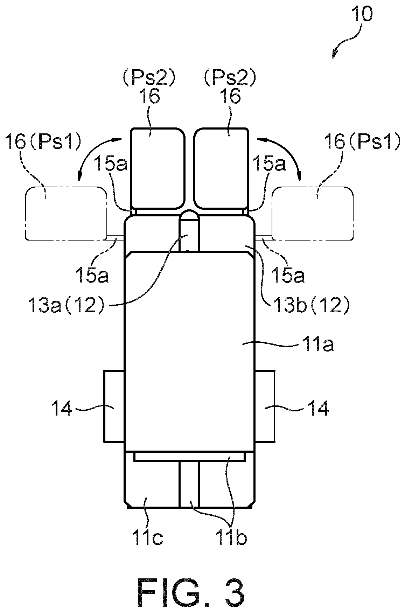

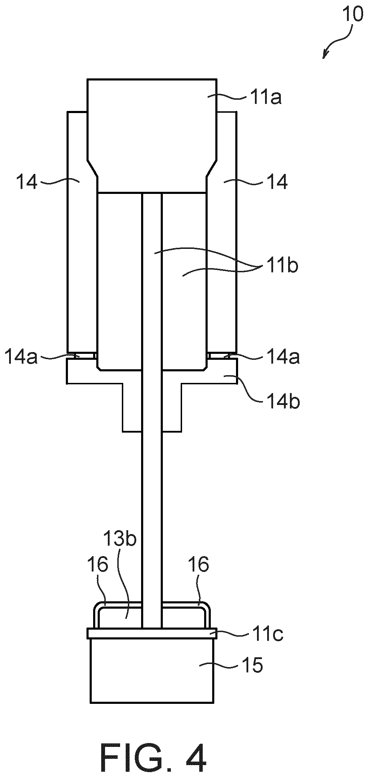

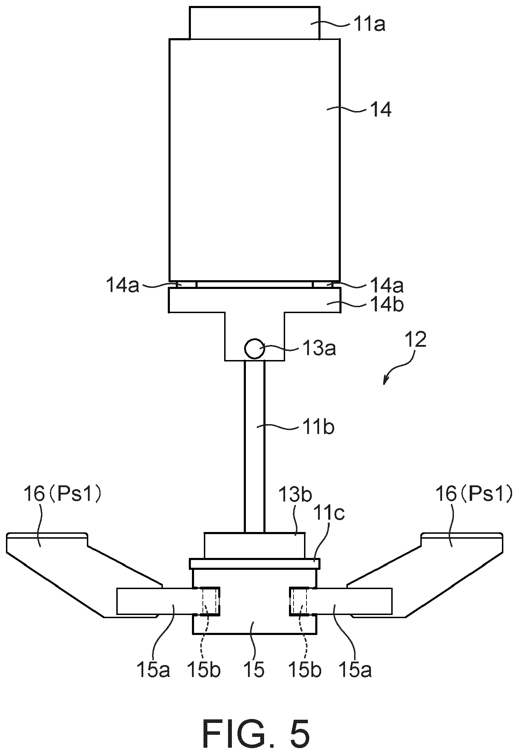

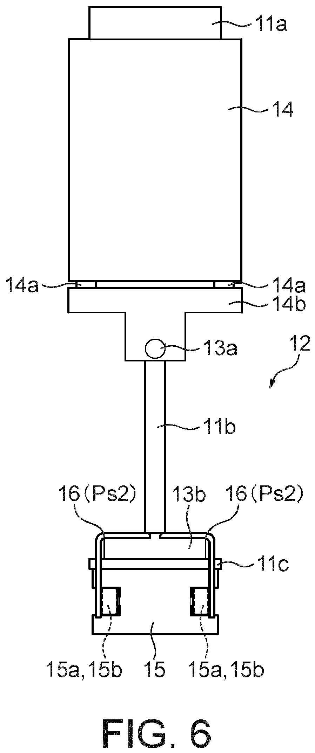

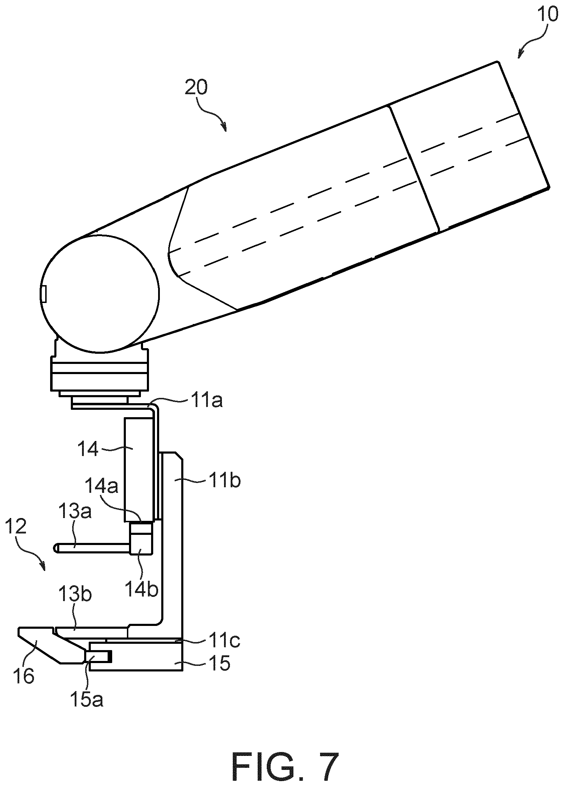

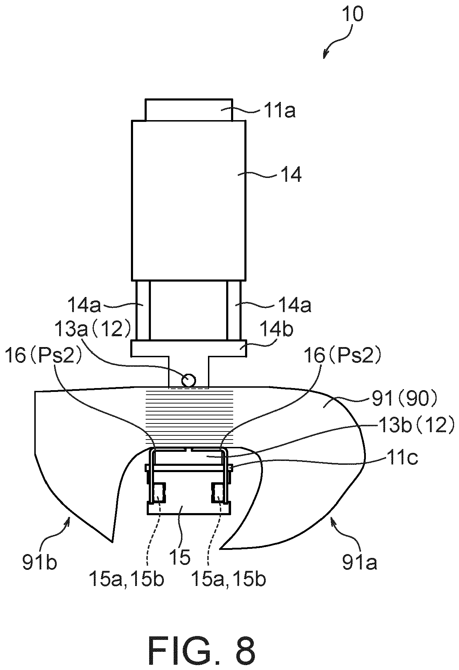

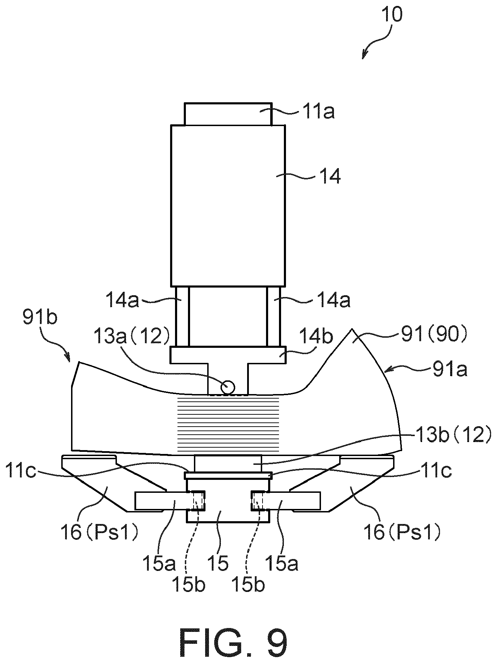

Fig. 2 is a side view showing an example of the bag bundle support device 10. Fig. 3 is a view of the bag bundle support device 10 shown in Fig. 2 as viewed from above. Fig. 4 is a rear view of the bag bundle support device 10 shown in Fig. 2. Figs. 5 and 6 are front views of the bag bundle support device 10 shown in Fig. 2. Fig. 7 is a diagram mainly illustrating a moving device 20 by an example. Figs. 8 and 9 are views for explaining an operation example of the bag bundle support device 10 shown in Fig. 2.

As shown in Fig. 7, the bag bundle support device 10 includes a holding device 12, movable members 16, a movable portion driving device 15, and a moving device 20.

The holding device 12 can hold a support part of a bag bundle 91 which is a part (in the present embodiment, a central part in the longitudinal direction (see Figs. 8 and 9)) of the bag bundle 91. The illustrated holding device 12 has a first sandwiching member 13a and a second sandwiching member 13b. The support part of a bag bundle 91 can be sandwiched from above and below by the first sandwiching member 13a and the second sandwiching member 13b. The first sandwiching member 13a is attached to a first support plate 11a via a holding drive device 14. The illustrated first sandwiching member 13a faces the second sandwiching member 13b in the sandwiching direction (specifically, the expansion-contraction direction of telescopic rods 14a) but does not face the movable members 16. However, the first sandwiching member 13a may face not only the second sandwiching member 13b but also the movable members 16 (in particular, the movable members 16 arranged at second orientation positions Ps2 (see Fig. 3)) in the sandwiching direction.

As shown in Figs. 8 and 9, one end of each bag 90 in the longitudinal direction (a first direction) forms a bag bundle top portion 91a to which an openable-closable fastener 93 (see Fig. 15 described later) is attached, and the other end forms a folded bag bundle bottom portion 91b which can be unfolded. Each bag 90 can stand on its own by unfolding the bag bundle bottom portion 91b of each bag 90. As described above, an illustrated bag bundle 91 has thick portions having a large thickness locally at both ends in the longitudinal direction.

The holding drive device 14 includes: telescopic rods 14a of which the amount of protrusion from the main body portion fixed to the first support plate 11a can be changed; and a relay member 14b to which the telescopic rods 14a and the first sandwiching member 13a are attached. The amount of protrusion of the telescopic rods 14a is changed under the control of the system controller 60 (see Fig. 1). The holding drive device 14 may have an arbitrary configuration and is typically configured by an air cylinder. The first sandwiching member 13a moves in the sandwiching direction (specifically, the expansion-contraction direction of telescopic rods 14a) according to the amount of protrusion of the telescopic rods 14a. On the other hand, the second sandwiching member 13b is fixedly attached to a second support plate 11b fixed to the first support plate 11a.

A plurality of movable members 16 (in the illustrated example, two movable members 16) are attached to a third support plate 11c via the movable portion driving device 15 and the third support plate 11c is fixed to the second support plate 11b. The movable portion driving device 15 fixed to the third support plate 11c has two drive swing members 15a. Each drive swing member 15a is provided so as to swing around a swing rotation shaft 15b with respect to the main body of the movable portion driving device 15 (see Figs.5 and 6). The swing state of each drive swing member 15a can be changed under the control of the system controller 60 (see Fig. 1). The two movable members 16 are attached to these drive swing members 15a respectively. Each movable member 16 swings in the horizontal direction about a corresponding swing rotation shaft 15b together with a corresponding drive swing member 15a.

In this way, the movable portion driving device 15 swings each movable member 16 in the horizontal direction so as to arrange each movable member 16 in a first orientation position Ps1 (see Fig. 5) and a second orientation position Ps2 (see Fig. 6). In the illustrated example, by swinging each movable member 16 by 90 degrees or more (for example, 90 degrees) around a swing rotation shaft 15b, each movable member 16 can be moved from one of the first orientation position Ps1 and the second orientation position Ps2 to the other. The movable portion driving device 15 may have an arbitrary configuration. Typically, an air chuck device driven by using compressed air can constitute the movable portion driving device 15.

As described above, each movable member 16 is provided so as to be movable with respect to the holding device 12 (specifically, the first sandwiching member 13a and the second sandwiching member 13b). The movable portion driving device 15 can move each movable member 16 with respect to the holding device 12 so as to locate each movable member 16 at the first orientation position Ps1 or the second orientation position Ps2 (see Fig. 3). The respective movable members 16 arranged at the first orientation positions Ps1 in a state where the holding device 12 holds the support part of a bag bundle 91, support from below parts of the bag bundle 91 positioned on the end portion sides in the longitudinal direction (first direction) compared to the support part. On the other hand, the respective movable members 16 arranged at the second orientation positions Ps2 in a state where the holding device 12 holds the support part of a bag bundle 91 do not support from below parts of the bag bundle 91 positioned on the end portion sides in the longitudinal direction compared to the support part.

In particular, in the illustrated bag bundle support device 10 including the two movable members 16, as shown in Fig. 9, the plurality of movable members 16 arranged in the first orientation positions Ps1 support from below parts of a bag bundle 91 located on both sides of the support part in the longitudinal direction (specifically, parts located on both end portion sides in the longitudinal direction compared to the support part (in the illustrated example, a part including the bag bundle top portion 91a and a part including the bag bundle bottom portion 91b) in a state where the holding device 12 holds the support part of the bag bundle 91. On the other hand, as shown in Fig. 8, the respective movable members 16 arranged at the second orientation positions Ps2 in a state where the holding device 12 holds the support part of a bag bundle 91 do not support from below parts of the bag bundle 91 located on the end portion sides in the longitudinal direction (specifically, a part including the bag bundle top portion 91a and a part including the bag bundle bottom portion 91b).

In states where each movable member 16 is arranged both in the first orientation position Ps1 and in the second orientation position Ps2, the height of the portion of each movable member 16 on which a bag bundle 91 is to be placed (in the illustrated example, the uppermost portion of each movable member 16) is the same as the height of the portion of the second sandwiching member 13b on which a bag bundle 91 is to be placed (in the illustrated example, the uppermost portion of the second sandwiching member 13b). However, in a state where each movable member 16 is arranged in the first orientation position Ps1 and/or the second orientation position Ps2, the portion of each movable member 16 on which a bag bundle 91 is to be placed may be higher or lower than the portion of the second sandwiching member 13b on which a bag bundle 91 is to be placed. Each movable member 16 arranged at the second orientation position Ps2 in a state where the holding device 12 holds the support part of a bag bundle 91 may support or need not support a bag bundle 91 from below.

The moving device 20 (see Fig. 7) is fixed to the first support plate 11a and is driven under the control of the system controller 60. Specifically, the moving device 20 moves the holding device 12 and each movable member 16 in an integrated manner from the first movement position (i.e., the pickup position P11) toward the second movement position (i.e., the accommodation position P12) and from the second movement position toward the first movement position. In the illustrated example, the moving device 20 is configured by an articulated robot and the holding device 12 and each movable member 16 can be oriented in various directions as required. The moving device 20 may employ another mechanism (for example, a parallel link robot or the like) capable of three-dimensionally moving the holding device 12 and each movable member 16.

Next, an example of a storage box 81 will be described. As described above, a storage box 81 functions as a placement unit on which a bag bundle 91 transferred by the bag bundle support device 10 (the first bag bundle transfer device 104) is placed.

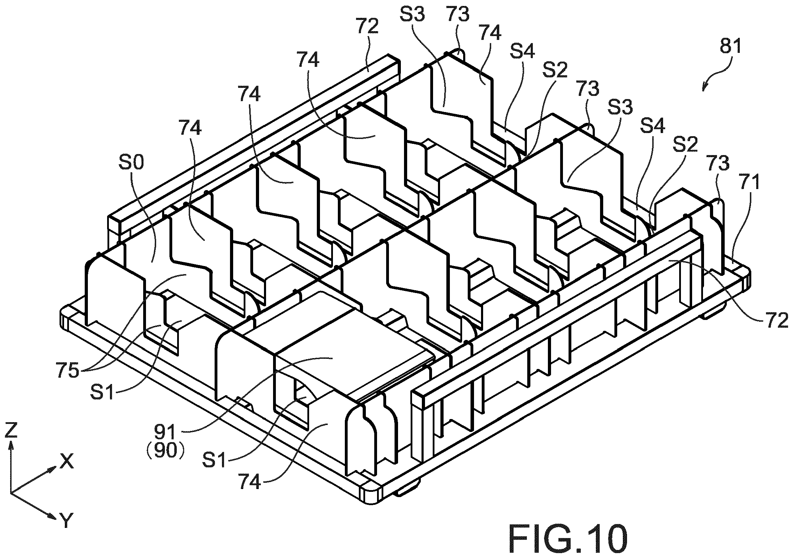

Fig. 10 is a perspective view showing an example of a storage box 81. In Fig. 10, the X direction and the Y direction are horizontal directions forming a right angle to each other and the Z direction is a height direction forming a right angle to the X direction and the Y direction. A storage box 81 includes a base frame 71, two frame engagement members 72, three front-rear partitions 73, five side partitions 74, and eight placement plates 75. The two frame engagement members 72, the three front-rear partitions 73, the five side partitions 74, and the eight placement plates 75 are installed on the base frame 71 and extend upward (in the Z direction).

The base frame 71 is a rectangular frame-shaped member including four side parts. The two frame engagement members 72 are fixed respectively to two of the four side parts of the base frame 71 that face each other (in the example shown in Fig. 10, the two side parts that face each other in the Y direction). When a plurality of storage boxes 81 are stacked on each other in the height direction, the base frame 71 of a storage box 81 located above is placed on the two frame engagement members 72 of a storage box 81 located below.

The three front-rear partitions 73 are installed at equal intervals in the Y direction and extend, parallel to each other, in the direction (i.e., in the X direction) perpendicular to each side partition 74 and each placement plate 75. A part of each front-rear partition 73 is arranged in the hollow portion of the base frame 71 while both ends of each front-rear partition 73 are placed on the base frame 71 (in the example shown in Fig. 10, on the two side parts facing in the X direction). Each front-rear partition 73 has a plurality of notches (i.e., 13 notches) into which the five side partitions 74 and the eight placement plates 75 are respectively fitted.

The five side partitions 74 are installed at equal intervals in the X direction and extend parallel to each other in the direction (i.e., in the Y direction) perpendicular to each front-rear partition 73. A part of each side partition 74 is arranged in the hollow portion of the base frame 71 while both ends of each side partition 74 are placed on the base frame 71 (in the example shown in Fig. 10, on the two side parts facing in the Y direction). Each side partition 74 has a plurality of notches (i.e., three notches) into which the three front-rear partitions 73 are respectively fitted. Each side partition 74 has two communication spaces S4.

The eight placement plates 75 extend, parallel to each other, in the direction (i.e., in the Y direction) perpendicular to each front-rear partition 73 and are arranged in such a manner that two placement plates 75 are located between side partitions 74 adjacent to each other. A part of each placement plate 75 is arranged in the hollow portion of the base frame 71 while both ends of each placement plate 75 are placed on the base frame 71 (in the example shown in Fig. 10, on the two side parts facing in the Y direction). Each placement plate 75 has a plurality of notches (i.e., three notches) into which the three front-rear partitions 73 are respectively fitted. Each placement plate 75 has two entry spaces S1.

A storage space S0 in which a bag bundle 91 is to be stored is configured by the space partitioned by front-rear partitions 73 adjacent to each other and side partitions 74 adjacent to each other. The storage box 81 shown in Fig. 10 has eight storage spaces S0 in total. In each storage space S0, two placement plates 75 are positioned and a bag bundle 91 to be stored is placed on these placement plates 75.

Two entry spaces S1 are located in each storage space S0. Two communication spaces S4 face each storage space S0. For each storage space S0, two entry spaces S1 face each other in the X direction, and two entry spaces S1 and two communication spaces S4 face each other in the X direction. A plurality of entry spaces S1 and a plurality of communication spaces S4 (in the illustrated example, eight entry spaces S1 and five communication spaces) provided for a plurality of storage spaces S0 arranged in the X direction (in the illustrated example, for four storage spaces S0) are located along a straight line extending in the X direction.

As described above, in the storage box 81 shown in Fig. 10, the placement plates 75 function as a "placement unit which is arranged at the second movement position (i.e., the accommodation position P12) and on which a bag bundle 91 is placed by the holding device 12 (i.e., the first bag bundle transfer device 104)". Further, the front-rear partitions 73 and the side partitions 74 function as "movement restriction members which restrict the movement of bag bundles 91". Further, the communication spaces S4 included in the side partitions 74 and the entry spaces S1 included in the placement plates 75 function as "evacuation spaces". In a state where a bag bundle 91 is not sandwiched by the first sandwiching member 13a and the second sandwiching member 13b, side partitions 74 restrict the movement of the bag bundle 91 while the holding device 12 (in particular, the second sandwiching member 13b) is made to pass through an entry space S1 and a communication space S4 by the moving device 20.

Next, an example of the bag bundle transfer method performed by the above-mentioned "bag bundle transfer system including the bag bundle support device 10 and the system controller 60" will be described.

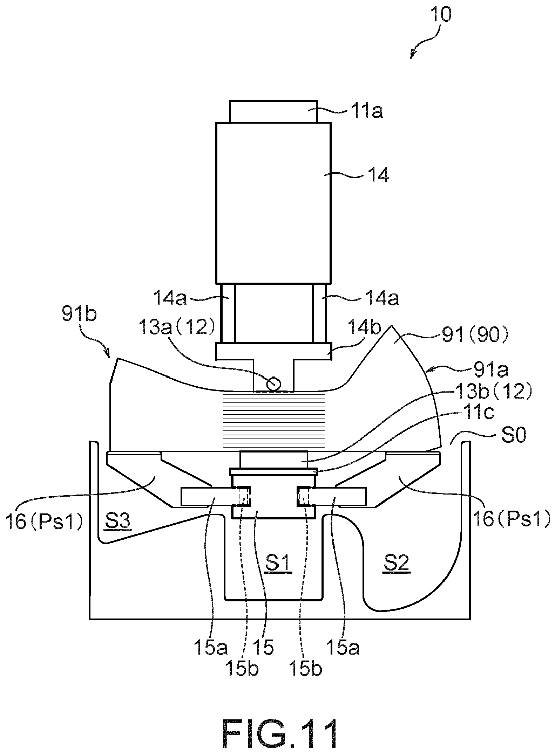

Figs. 11 to 14 are side views of the bag bundle support device 10 for explaining an example of the bag bundle transfer method.

In accordance with the bag bundle transfer method described below, the bag bundle transfer system of the present embodiment transfers a bag bundle 91 from the first movement position (the pickup position P11) toward the second movement position (the accommodation position P12) and places the bag bundle 91 on the placement unit (i.e., a storage box 81) arranged at the second movement position. Specifically, the bag bundle transfer method includes the following steps.

First, the support part of a bag bundle 91 arranged at the pickup position P11 (the first movement position) is held by the holding device 12 (i.e., a bag bundle holding step). In the illustrated bag processing system 100, the first bag bundle transfer device 104 (the bag bundle support device 10) receives a bag bundle 91 from the pickup device 103 and holds the bag bundle 91 as shown in Fig. 8. Specifically, in a state where a bag bundle 91 is arranged between the first sandwiching member 13a and the second sandwiching member 13b, the holding drive device 14 increases the amount of protrusion of the telescopic rods 14a so as to move the first sandwiching member 13a close to the bag bundle 91 and the second sandwiching member 13b. As a result, the bag bundle 91 is sandwiched and held by the first sandwiching member 13a and the second sandwiching member 13b. During this step, the respective movable members 16 are arranged at the second orientation positions Ps2, so as to not support both ends of the bag bundle 91 (specifically, the bag bundle top portion 91a and the bag bundle bottom portion 91b) in the longitudinal direction (i.e., in the lateral direction of the paper surface of Fig. 8). As a result, both ends of the bag bundle 91 in the longitudinal direction are placed in a state of hanging down due to its own weight.

Then, the bag bundle 91 is moved, together with the holding device 12, from the pickup position P11 (the first movement position) toward the accommodation position P12 (the second movement position) in a state where the support part is held by the holding device 12 (i.e., a bag bundle movement step).

Before the bag bundle 91 is placed on placement plates 75 of a storage box 81, each movable member 16 which is moved from the pickup position P11 toward the accommodation position P12 together with the holding device 12 in an integrated manner is moved from the second orientation position Ps2 to the first orientation position Ps1 in a state where the support part of the bag bundle 91 is held by the holding device 12 (i.e., a movable member movement step). Specifically, as shown in Fig. 9, each movable member 16 is moved from the second orientation position Ps2 and is arranged at the first orientation position Ps1 in a state where the bag bundle 91 is in contact with and is held by the first sandwiching member 13a and the second sandwiching member 13b. As a result, both ends (i.e., the bag bundle top portion 91a and the bag bundle bottom portion 91b) of the bag bundle 91 in the longitudinal direction (i.e., the lateral direction of the paper surface of Fig. 9) are supported and lifted from below by the corresponding movable members 16. As described above, the central portion of the bag bundle 91 in the longitudinal direction is supported from below by the second sandwiching member 13b, and both ends of the bag bundle 91 in the longitudinal direction are supported from below by the two movable members 16. As a result, the bag bundle 91 is supported by the holding device 12 and each movable member 16 in a state where the bag bundle 91 has basically no large hanging.

The timing at which each movable member 16 moves from the second orientation position Ps2 to the first orientation position Ps1 is not limited. In the illustrated example, each movable member 16 is arranged at the first orientation position Ps1 before a bag bundle 91 held by the holding device 12 reaches above a storage box 81 (the second accommodation stop position Pa2). For example, each movable member 16 may be arranged at the first orientation position Ps1 in a state where a bag bundle 91 is arranged at the pickup position P11 (for example, in a state where a bag bundle 91 is held by the pickup device 103). Further, each movable member 16 may be moved from the second orientation position Ps2 to the first orientation position Ps1 at an intermediate position between the pickup position P11 and the accommodation position P12. Further, each movable member 16 may be moved from the second orientation position Ps2 to the first orientation position Ps1 in a state where a bag bundle 91 held by the holding device 12 is located above a storage box 81 (the second accommodation stop position Pa2).

Then, a bag bundle 91 released from the holding device 12 is placed on placement plates 75 of a storage box 81 (i.e., a bag bundle placement step).

In the illustrated example, as shown in Fig. 11, the holding device 12 and each movable member 16 are lowered by the moving device 20 in a state where a bag bundle 91 is sandwiched between the first sandwiching member 13a and the second sandwiching member 13b and the movable members 16 are arranged at the first orientation positions Ps1. As a result, the bag bundle 91 supported by the holding device 12 and each movable member 16 is arranged in a position close to placement plates 75 directly above the placement plates 75.

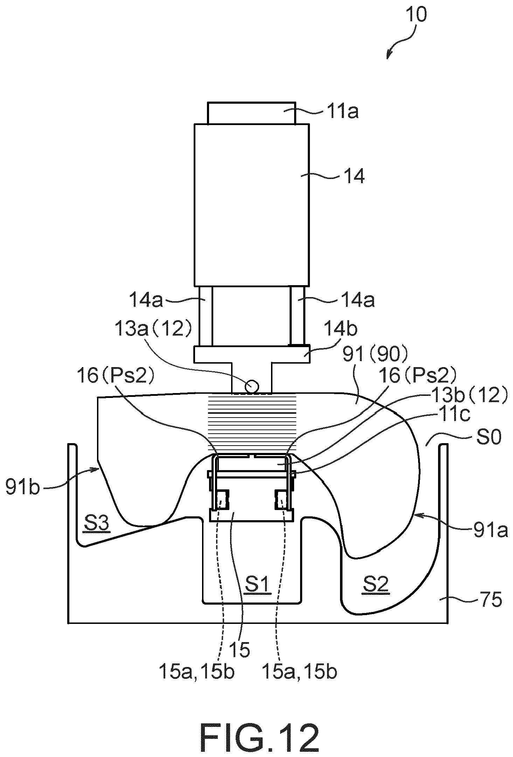

After that, each movable member 16 is moved from the first orientation position Ps1 to the second orientation position Ps2 in a state where the bag bundle 91 is located directly above the placement plates 75 (see Fig. 12). As a result, a part of the bag bundle 91 is placed on the placement plates 75 in a state where the bag bundle 91 is held by the holding device 12. Specifically, a hanging portion (in the example shown in Fig. 12, the end including the bag bundle bottom portion 91b) of the bag bundle 91 is supported from below by the placement plates 75, in such a manner that the amount of hanging of the bag bundle 91 is prevented from becoming excessive.

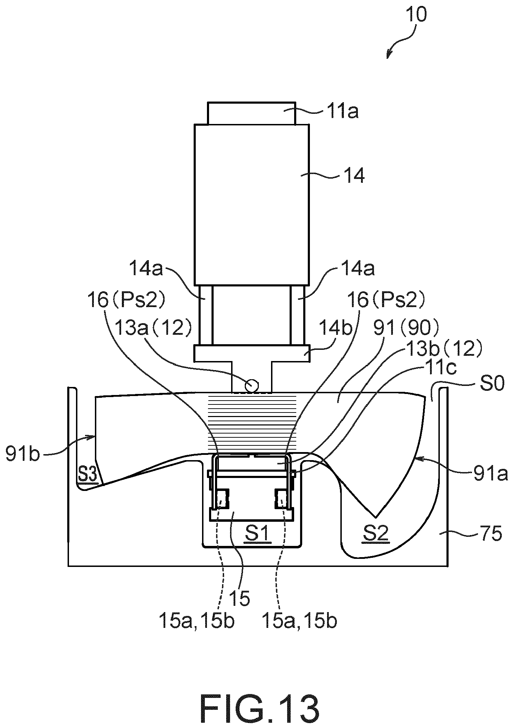

After that, the holding device 12 and each movable member 16 are moved downward in an integrated manner by the moving device 20 in such a manner that the bag bundle 91 is placed on the placement plates 75 over a wider range (see Fig. 13). At this time, the movable portion driving device 15, each movable member 16, the third support plate 11c, the second sandwiching member 13b, and the second support plate 11b at least partially enter a corresponding entry space S1 in such a manner that collision between devices is prevented. Further, the bag bundle top portion 91a of the bag bundle 91 enters a corresponding first thickness arrangement space S2. Further, the bag bundle bottom portion 91b of the bag bundle 91 enters a corresponding second thickness arrangement space S3.

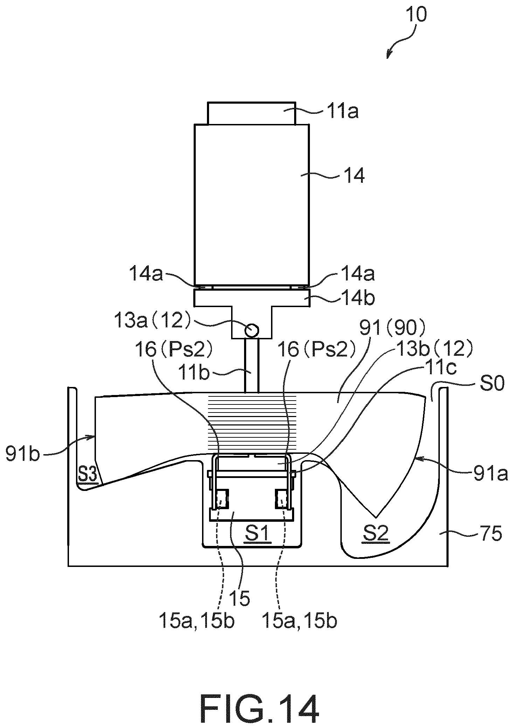

After that, the amount of protrusion of the telescopic rods 14a from the main body of the holding drive device 14 is reduced in such a manner that the first sandwiching member 13a is moved upward and the first sandwiching member 13a is arranged in a position separated from the bag bundle 91 (that is, in a position such that the first sandwiching member 13a does not make contact with the bag bundle 91) (see Fig. 14). In this way, the bag bundle 91 is placed in a state where the bag bundle 91 is not sandwiched by the first sandwiching member 13a and the second sandwiching member 13b and is placed on the second sandwiching member 13b.

Then, the holding device 12 moves in a horizontal direction while causing the bag bundle 91 to press against a movement restriction member (in particular, a corresponding side partition 74) so as to release the bag bundle 91 and place the bag bundle 91 on the placement plates 75 (see Fig. 10). Specifically, the holding device 12 and each movable member 16 are moved in a horizontal direction (i.e., in the X direction in Fig. 10) by the moving device 20 so as to move away from the corresponding storage space S0. In the process of this movement, the bag bundle 91 comes into contact with a side partition 74 and thus the movement of the bag bundle 91 is restricted while the holding device 12 and each movable member 16 and the like pass through an entry space S1 and a communication space S4 so as to move smoothly. As a result, the bag bundle 91 is passed from the holding device 12 (in particular, the second sandwiching member 13b) to placement plates 75 and is stored in a corresponding storage space S0.

As described above, according to the present embodiment, a bag bundle 91 is transferred from the first movement position to the second movement position while the bag bundle 91 is supported by the holding device 12 and the movable members 16, and the bag bundle 91 can be arranged in the second movement position. This makes it possible to appropriately transfer the bag bundle 91 to the second movement position while the state of the bag bundle 91 can be prevented from being disturbed.

In particular, the operation of supporting a bag bundle 91 at the beginning is performed by sandwiching a relatively narrow extent (the support part) of the bag bundle 91 with the holding device 12 (i.e., the first sandwiching member 13a and the second sandwiching member 13b). Thus, the holding device 12 can accurately support the support part of the bag bundle 91. After that, the movable members 16 are moved from the second orientation positions Ps2 to the first orientation positions Ps1, so that the bag bundle 91 is supported over a broad range by the holding device 12 and the movable members 16. In this way, a bag bundle 91 can be stably and appropriately supported by first supporting the bag bundle 91 over a limited range with the holding device 12 and then supporting the bag bundle 91 over a wider range with the holding device 12 and each movable member 16.

Further, end portions of a bag bundle 91 (i.e., the bag bundle top portion 91a and the bag bundle bottom portion 91b) are supported from below by using the movable members 16, so that the bag bundle 91 can be prevented from being placed on the placement unit (i.e., a storage box 81) in a state where the end portions of the bag bundle 91 are excessively warped. As a result, the bag bundle 91 can be placed on the placement unit in an appropriate state while the bags 90 included in the bag bundle 91 are prevented from bending.

Further, by setting the swing direction of each movable member 16 to be a horizontal direction, the space in the height direction required for swinging each movable member 16 can be reduced. As a result, a bag bundle 91 can be brought closer to the placement unit in a state where the bag bundle 91 is held by the holding device 12 while the collision between the movable members 16 and the placement unit (placement plates 75) during the swinging of the movable members 16 is prevented. Thus, when the movable members 16 are moved from the first orientation positions Ps1 to the second orientation positions Ps2 so as to release the end portions of the bag bundle 91 from the movable members 16, the end portions of the bag bundle 91 can be brought into contact with placement plates 75 and supported by the placement plates 75 in a more reliable manner.

Further, by releasing a bag bundle 91 from the holding device 12 while pressing the bag bundle 91 against a side partition 74, the position of the plurality of bags 90 included in the bag bundle 91 can be adjusted with reference to the side partition 74.

### [First modification example]

While a case where the first bag bundle transfer device 104 is configured by the bag bundle support device 10 is shown as an example in the above-described embodiment, the second bag bundle transfer device 106 may be configured by the bag bundle support device 10. In this case, a bag bundle 91 is transferred from the first movement position (i.e., the take-out position P21) toward the second movement position (i.e., the supply position P22) by the second bag bundle transfer device 106 (bag bundle support device 10).

Fig. 15 is a plan view showing a configuration example of the second bag bundle transfer device 106 and the bag bundle position adjustment device 109 according to a first modification example of the bag bundle transfer system (the bag bundle support device 10). In Fig. 15, the bag bundle support device 10 being in the process of delivering a bag bundle 91 to the bag bundle position adjustment device 109 of the transfer relay device 107 is indicated by solid lines while the bag bundle support device 10 which has been evacuated from the bag bundle position adjustment device 109 after the bag bundle 91 is passed to the bag bundle position adjustment device 109 is indicated by two-dot chain lines.

The second bag bundle transfer device 106 shown in Fig. 15 has a configuration similar to the first bag bundle transfer device 104 described in the above-described embodiment. The bag bundle position adjustment device 109 shown in Fig. 15 includes a frame 121, a placement surface member 122, a first conveyance roller 123, a second conveyance roller 124, a first regulation unit 125, and a second regulation unit 126.

The first conveyance roller 123 and the second conveyance roller 124 are rotatably attached to the frame 121 and the placement surface member 122 is supported by the first conveyance roller 123 and the second conveyance roller 124. The placement surface member 122 is formed by an endless belt. The first conveyance roller 123 is actively rotated by a drive device (not illustrated) driven under the control of the system controller 60 (see Fig. 1). The second conveyance roller 124 is freely rotatably attached to the frame 121 and rotates according to the traveling of the placement surface member 122. The drive device rotates the first conveyance roller 123 in such a manner that the placement surface member 122 travels while being guided by the first conveyance roller 123 and the second conveyance roller 124.

The first regulation unit 125 and the second regulation unit 126 are positioned so as to face each other in the regulation direction (i.e., in the vertical direction in the paper surface of Fig. 15) which is a horizontal direction perpendicular to the traveling direction (i.e.., to the lateral direction in the paper surface of Fig. 15) of the placement surface member 122. The first regulation unit 125 and the second regulation unit 126 are provided so as to be movable in the regulation direction by a drive device (not illustrated) driven under the control of the system controller 60 (see Fig. 1) and move in a direction such that the first regulation unit 125 and the second regulation unit 126 approach each other and in a direction such that the first regulation unit 125 and the second regulation unit move away from each other.

The first regulation unit 125 has a first intermediate space 127. The second regulation unit 126 has a second intermediate space 128. The first intermediate space 127 and the second intermediate space 128 are spaces where the second bag bundle transfer device 106 enter when the second bag bundle transfer device 106 places a bag bundle 91 on the bag bundle position adjustment device 109. Since the first intermediate space 127 and the second intermediate space 128 are provided, the bag bundle 91 can be placed on the bag bundle position adjustment device 109 while the collision between the second bag bundle transfer device 106 and each of the first regulation unit 125 and the second regulation unit 126 is prevented.

In the present modification example, the placement surface member 122 functions as "a placement unit which is provided in the supply position P22 (the second movement position) and on which a bag bundle 91 is placed by the holding device 12 (the second bag bundle transfer device 106)". Further, the first regulation unit 125 and the second regulation unit 126 function as "movement restriction members which restrict the movement of a bag bundle 91", and the first intermediate space 127 and the second intermediate space 128 function as "evacuation spaces".

The holding device 12 being in a state of holding a bag bundle 91 is moved from the take-out position P21 to the supply position P22 by the moving device 20 driven under the control of the system controller 60. As a result, the bag bundle 91 is positioned directly above the placement surface member 122 in a state of being sandwiched and held by the first sandwiching member 13a and the second sandwiching member 13b of the second bag bundle transfer device 106.

Then, the first sandwiching member 13a is moved upward by the holding drive device 14 and is arranged at a position such that the first sandwiching member 13a is away from the bag bundle 91 (i.e., at a position such that the first sandwiching member 13a is not in contact with the bag bundle 91). As a result, the bag bundle 91 is placed in a state where the bag bundle 91 is not sandwiched between the first sandwiching member 13a and the second sandwiching member 13b. Then, in a state where the bag bundle 91 is not sandwiched by the first sandwiching member 13a and the second sandwiching member 13b, the holding device 12 (in particular, the second sandwiching member 13b) is made to pass through the first intermediate space 127 by the moving device 20 (see Fig. 7) while the movement restriction member (in the example shown in Fig. 15, the first regulation unit 125) restricts the movement of the bag bundle 91. As a result, the bag bundle 91 is given from the second bag bundle transfer device 106 (the holding device 12) onto the bag bundle position adjustment device 109 (the placement surface member 122).

Each movable member 16 swings in a similar manner to that in the above-described embodiment. Specifically, when a bag bundle 91 arranged at the take-out position P21 is held by the holding device 12, each movable member 16 is arranged at the second orientation position Ps2. After that, before the bag bundle 91 is placed on the placement surface member 122 (on the placement unit arranged at the supply position P22), each movable member 16 is moved from the second orientation position Ps2 to the first orientation position Ps1 in a state where the bag bundle 91 is held by the holding device 12. After that, each movable member 16 is moved from the first orientation position Ps1 to the second orientation position Ps2, the holding device 12 and each movable member 16 are retracted from the bundle position adjustment device 109 in a state where each movable member 16 is arranged in the second orientation position Ps2, and the bag bundle 91 is given from the holding device 12 (the second bag bundle transfer device 106) to the bag bundle position adjustment device 109.

When a bag bundle 91 is given from the second bag bundle transfer device 106 to the bag bundle position adjustment device 109, the distance between the first regulation unit 125 and the second regulation unit 126 may be larger than the size of the bag bundle 91 in the width direction (i.e., the vertical direction in Fig. 15). In this case, a bag bundle 91 can be smoothly arranged between the first regulation unit 125 and the second regulation unit 126. In this case, preferably, the first regulation unit 125 and/or the second regulation unit 126 are moved in the width direction of a bag bundle 91 so as to narrow the distance between the first regulation unit 125 and the second regulation unit 126 after the bag bundle 91 is given from the second bag bundle transfer device 106 to the bag bundle position adjustment device 109, and thereby the bag bundle 91 is sandwiched by the first regulation unit 125 and the second regulation unit 126. This makes it possible to precisely adjust the arrangement position of the bag bundle 91 by the first regulation unit 125 and the second regulation unit 126 and accurately arrange the bag bundle 91 in a desired position on the placement surface member 122.

### [Other modification examples]

The present disclosure is not limited to the above-described embodiments and modification examples. For example, various modifications may be added to each element of the above-described embodiments and modification examples. Further, the configurations of the above-described embodiments and modification examples may be combined in whole or in part.

For example, the number of movable members 16 is not limited to two, and three or more movable members 16 may be provided or only one single movable member 16 may be provided. For example, if the plane shape of a bag bundle 91 is rectangular, four movable members 16 that can support from below the portions of the bag bundle 91 corresponding to the four corners of the rectangular plane may be provided.

The position of the part of a bag bundle 91 that is held by the holding device 12 (i.e., the position of the support part) is not limited. Further, the location of a bag bundle 91 supported by a movable member 16 is not limited. A part of a bag bundle 91 which is closer to an end portion of the bag bundle 91 (in particular, a part of a bag bundle 91 which is farther from the support part held by the holding device 12) tends to hang down to a larger extent. Therefore, from the viewpoint of reducing hanging, it is preferable that an end part (in particular, a location far from the support part) of a bag bundle 91 should be supported by a movable member 16.

The movable members 16 may move in any direction when moving between the first orientation position Ps1 and the second orientation position Ps2. The movable members 16 may be moved in a horizontal direction, in the height direction, or in a direction including a horizontal direction component and a height direction component so as to be arranged in the first orientation positions Ps1 and the second orientation positions Ps2.

The holding device 12 (i.e., the first sandwiching member 13a and the second sandwiching member 13b) and the movable members 16 may be attached to a common integrated frame body (see the first support plate 11a, the second support plate 11b, and the third support plate 11c described above) or may be attached to two or more frame bodies (not shown) provided as separate bodies.

When a bag bundle 91 is delivered from the holding device 12 to the placement unit, the movable members 16 may be arranged at the first orientation positions Ps1 or may be arranged at the second orientation positions Ps2.

## Claims

1. A bag bundle transfer system (10) of transferring a bag bundle (91) from a first movement position (P11, P21) toward a second movement position (P12, P22), the bag bundle transfer system (10) comprising:
a holding device (12) which is capable of holding a support part of the bag bundle (91) which is a part of the bag bundle (91);
a movable member (16) which is provided so as to be able to move with respect to the holding device (12);
a drive device (15) which is capable of driving the movable member (16) to move with respect to the holding device (12) so as to arrange the movable member (16) in a first orientation position (Ps1) and a second orientation position (Ps2); and
a moving device (20) which moves the holding device (12) and the movable member (16) in an integrated manner from the first movement position (P11, P21) toward the second movement position (P12, P22), wherein:
the movable member (16) arranged in the first orientation position (Ps1) in a state where the holding device (12) holds the support part supports from below a part of the bag bundle (91) which is located on an end portion side in a first direction from the support part, and
the movable member (16) arranged in the second orientation position (Ps2) in a state where the holding device (12) holds the support part does not support from below a part of the bag bundle (91) which is located on an end portion side in the first direction from the support part.

2. The bag bundle transfer system (10) as defined in claim 1, wherein the drive device (15) moves the movable member (16) in a horizontal direction so as to arrange the movable member (16) in the first orientation position (Ps1) and the second orientation position (Ps2).

3. The bag bundle transfer system (10) as defined in claim 1 or 2, wherein:
a plurality of movable members (16) are provided, and
the plurality of movable members (16) arranged in the first orientation position (Ps1) in a state where the holding device (12) holds the support part support from below parts of the bag bundle (91) which are located on both sides in the first direction from the support part.

4. The bag bundle transfer system (10) as defined in any one of claims 1 to 3, comprising:
a placement unit (81) which is arranged in the second movement position (P12, P22) and on which the bag bundle (91) is placed by the holding device (12); and
a movement restriction member (73, 74, 125, 126) which restricts movement of the bag bundle (91), wherein:
the holding device (12) includes a first sandwiching member (13a) and a second sandwiching member (13b) which are capable of sandwiching the bag bundle (91),
the movement restriction member (73, 74, 125, 126) has an evacuation space (S1, S4, 127, 128), and
in a state where the bag bundle (91) is not sandwiched between the first sandwiching member (13a) and the second sandwiching member (13b), the moving device (20) moves the holding device (12) in such a manner that the holding device (12) passes through the evacuation space (S1, S4, 127, 128) while the movement restriction member (73, 74, 125, 126) restricts movement of the bag bundle (91).

5. A bag bundle transfer method of transferring a bag bundle (91) from a first movement position (P11, P21) toward a second movement position (P12, P22) and placing the bag bundle (91) on a placement unit (81) arranged in the second movement position (P12, P22), the bag bundle transfer method comprising the steps of:
causing a holding device (12) to hold a support part of the bag bundle (91) arranged in the first movement position (P11, P21), the support part being a part of the bag bundle (91);
moving the bag bundle (91) from the first movement position (P11, P21) toward the second movement position (P12, P22) together with the holding device (12) in a state where the support part is held by the holding device (12);
causing a movable member (16) to move from a second orientation position (Ps2) to a first orientation position (Ps1) in a state where the support part is held by the holding device (12) before the bag bundle (91) is placed on the placement unit (81), the movable member (16) being moved from the first movement position (P11, P21) toward the second movement position (P12, P22) together with the holding device (12) in an integrated manner; and
placing the bag bundle (91) released from the holding device (12), on the placement unit (81), wherein:
the movable member (16) arranged in the first orientation position (Ps1) in a state where the holding device (12) holds the support part supports from below a part of the bag bundle (91) which is located on an end portion side in a first direction from the support part, and
the movable member (16) arranged in the second orientation position (Ps2) in a state where the holding device (12) holds the support part does not support from below a part of the bag bundle (91) which is located on an end portion side in the first direction from the support part.

6. The bag bundle transfer method as defined in claim 5, wherein the movable member (16) is moved from the first orientation position (Ps1) to the second orientation position (Ps2) in a state where the bag bundle (91) is positioned directly above the placement unit (81).

7. The bag bundle transfer method as defined in claim 6, wherein a part of the bag bundle (91) is placed on the placement unit (81) by moving the movable member (16) from the first orientation position (Ps1) to the second orientation position (Ps2) in a state where the bag bundle (91) is positioned directly above the placement unit (81).

8. The bag bundle transfer method as defined in any one of claims 5 to 7, wherein the holding device (12) moves while bringing the bag bundle (91) into contact with a movement restriction member (73, 74, 125, 126) so as to restrict movement of the bag bundle (91), in such a manner that the holding device (12) releases the bag bundle (91) and places the bag bundle (91) on the placement unit (81).
